# EUROPEAN PATENT APPLICATION

(11) **EP 4 703 285 A1**
(43) Date of publication of application: **04.03.2026**
(21) Application number: 24796596.5
(22) Date of filing: 11.03.2024
(51) Int. Cl.: B65D 8/04, B21D 51/18, B21D 51/26, B65B 53/02, B65D 1/16, B65D 8/00, B65D 25/20, B65D 65/42

(54) **CAN CONTAINER AND MANUFACTURING METHOD FOR CAN CONTAINER**

(30) Priority: 28.04.2023 JP 2023074551
(71) Applicant: Toyo Seikan Co., Ltd., Tokyo 141-8640 (JP)
(72) Inventor: YAMADA, Kouji, Yokohama-shi, Kanagawa 230-0001 (JP); SAITO, Yukiko, Yokohama-shi, Kanagawa 230-0001 (JP)
(74) Representative: Pfenning, Meinig & Partner mbB
(86) International application number: PCT/JP2024/009352
(87) International publication number: WO 2024/224838

(57) **Abstract**

A first aspect of the present invention provides a can container including a reduced diameter portion and a can barrel portion, wherein the amount of a lubricant present at the reduced diameter portion is equal to or less than 2 mg/can. A second aspect provides a manufacturing method for a can container, the manufacturing method including: a forming process of forming a can body having a tubular shape from a sheet material including a metal sheet and a resin film layer covering at least one surface of the metal sheet or from a sheet material including a metal sheet; a lubricating process of applying a lubricant to the can body formed; a diameter reducing process of reducing a diameter of a part of the can body to form a reduced diameter portion; and a printed layer forming process of forming an ink print layer on an outer peripheral surface of the can body.

## Description

### Technical Field

The present invention relates to a can container and a manufacturing method for a can container.

### Background Art

For a can container such as a beverage can, it is known to protect a can body by forming a protective layer at a surface of the can body at the time of diameter reduction. For example, Patent Document 1 describes "a base coater (BC) and an over varnish (OV) are provided before the necker flanger (SDN), and an inside spray (INS) is further provided. Thereby, in the present embodiment, after the protective layer is formed at the outer surface and the inner surface of the can, the neck processing is performed, and the can is less likely to be scratched. (Paragraph 0025)". In addition, as a laminating method, Patent Document 2 describes "A manufacturing method for organic resin coated metal plate, causing a heated and molten organic resin to be directly extruded to a metal plate, which has a long strip shape and is continuously supplied, in a film state by a T-die to be brought into contact with the metal plate and sandwiching the organic resin and the metal plate with a pair of laminate rolls to pressure-bonding the organic resin and the metal plate, wherein, when a joint (hereinafter referred to as a "stitcher") of the metal plate passes a laminate roll part, the laminate rolls are opened so that the organic resin and the metal plate are sandwiched by a pair of auxiliary laminate rolls (hereinafter referred to as "auxiliary rolls") instead of the laminate rolls to be to pressure-bonded, and after the stitcher passes, the auxiliary rolls are opened so that the organic resin and the metal plate are sandwiched by the laminate rolls to be pressure-bonded. (Claim 1)".

### Citation List

### Patent Literature

Patent Document 1: JP 2019-025521 A
Patent Document 2: JP 2004-25640 A

### General Disclosure

A first aspect of the present invention provides a can container having a reduced diameter portion and a can barrel portion. The amount of a lubricant present at the reduced diameter portion may be equal to or less than 2 mg/can.

In the above configuration, the can container may have a layer configuration including a can main body having a tubular shape and an ink print layer formed on an outer surface of the can main body. The amount of the lubricant present on the outer surface side of the can main body at the reduced diameter portion may be equal to or less than 2 mg/can.

The ink print layer may be a layer which is directly formed on the can main body and in which ink is cured.

In the above configuration, the ink print layer may be a shrink film which covers the can main body further from the outside and on which an ink image is printed.

In the above configuration, the can container may have a layer configuration including a can main body having a tubular shape and a resin film layer that covers at least an outer surface of the can main body. The amount of the lubricant present at the outer surface of the resin film layer at the reduced diameter portion may be equal to or less than 2 mg/can.

In the above configuration, the can container may include an ink print layer formed on an outer surface of the resin film layer. The amount of the lubricant present on the outer surface side of the resin film layer at the reduced diameter portion may be equal to or less than 2 mg/can.

In the above configuration, the ink print layer may be a layer which is directly formed on the resin film layer and in which ink is cured.

In the above configuration, the ink print layer may be a shrink film which covers the resin film layer further from the outside and on which an ink image is printed.

In the above configuration, the can container may be for beverages and foods and filled with a beverage or a food.

A second aspect of the present invention provides a manufacturing method for a can container, the manufacturing method including a forming process, a lubricating process, a diameter reducing process, and a printed layer forming process. In the forming process, a can body having a tubular shape may be formed from a sheet material including a metal sheet and a resin film layer covering at least one surface of the metal sheet, or a sheet material including a metal sheet. In the lubricating process, a lubricant may be applied to the can body formed. In the diameter reducing process, a diameter of a part of the can body may be reduced to form a reduced diameter portion. In the printed layer forming process, an ink print layer may be formed at an outer peripheral surface of the can body.

In the above configuration, the forming process may be a process of forming the can body from a sheet material including a metal sheet, a resin film, and a lubricant layer formed at one surface of the resin film.

In the above configuration, the forming process may be a process of forming the can body from a sheet material including a metal sheet and a lubricant layer formed at one surface or both surfaces of the metal sheet.

In the above configuration, the manufacturing method for a can container may further include a removing process of removing at least a part of the lubricant layer between the forming process and the lubricating process.

A third aspect of the present invention provides a manufacturing method for a can container, the manufacturing method including a forming process, a diameter reducing process, and a printed layer forming process. In the forming process, a can body having a tubular shape may be formed from a sheet material including a metal sheet, a resin film covering at least one surface of the metal sheet, and a lubricant layer formed at one surface of the resin film, or from a sheet material including a metal sheet and a lubricant layer formed at one surface or both surfaces of the metal sheet. In the diameter reducing process, a reduced diameter portion may be formed by reducing the diameter of a part of the can body without applying the lubricant to the can body formed. In the printed layer forming process, an ink print layer may be formed at an outer peripheral surface of the can body.

In the removing process, at least a part of the lubricant applied in the lubricating process or the lubricant layer may be removed between the diameter reducing process and the printed layer forming process.

A fourth aspect of the present invention provides a manufacturing method for a can container, the manufacturing method including a lubricating process, a diameter reducing process, and a storing process. In the lubricating process, a lubricant may be applied to a can body including a can main body having a tubular shape and a resin film layer covering at least an outer surface of the can main body, or a can body including a can main body having a tubular shape. In the diameter reducing process, a diameter of a part of the can body may be reduced to form a reduced diameter portion. The can body may be stored in a plain state in which printing is not performed.

A fifth aspect of the present invention provides a manufacturing method for a can container, the manufacturing method including a forming process, a diameter reducing process, and a storing process. In the forming process, a can body having a tubular shape may be formed from a sheet material including a metal sheet, a resin film covering at least one surface of the metal sheet, and a lubricant layer formed at one surface of the resin film. In the diameter reducing process, a reduced diameter portion may be formed by reducing the diameter of a part of the can body without applying the lubricant to the can body. In the storing process, the can body may be stored in a plain state in which printing is performed.

In the above configuration, the manufacturing method may further include a removing process of removing a part of the lubricant of the can body between the diameter reducing process and the storing process.

In the above configuration, the storing process may be performed in a light-shielded state so that the can body is not irradiated with an ultraviolet ray.

In the above configuration, the storing process may include storing the can body in the light-shielded state for one month or more.

In the above configuration, the printed layer forming process may include performing printing to an outer surface of the can body by any one or more of inkjet printing and printing with a printing plate.

In the above configuration, the printed layer forming process may include covering the outer surface of the can body with a shrink film on which an ink image is printed.

In the above configuration, in the removing process, a thermal energy (heat-set oven), a plasma treatment, or a flame treatment may be used.

In the above configuration, the printed layer forming process may include covering the outer surface of the can body with a label with an adhesive (a tack label) on which an ink image is printed.

Note that the above-described summary of the invention does not list all features of the present invention. In addition, sub-combinations of groups of these features can also be an invention.

### Brief Description of Drawings

FIG. 1 illustrates an example of a general view of a can container 10 in the present embodiment.
FIG. 2 illustrates an example of a cross-sectional view of the can container 10 in the present embodiment.
FIG. 3 illustrates another example of a cross-sectional view of the can container 10 in the present embodiment.
FIG. 4 illustrates an example of a flow of a manufacturing method for the can container 10 in the present embodiment.
FIG. 5 illustrates an example of a sub-flow (wet forming) in S100 in FIG. 4.
FIG. 6 illustrates another example of a sub-flow (dry forming) in S100 in FIG. 4.
FIG. 7 illustrates another example of a flow of the manufacturing method for the can container 10 in the present embodiment.
FIG. 8 illustrates another example of a flow of the manufacturing method for the can container 10 in the present embodiment.
FIG. 9 illustrates another example of a flow of the manufacturing method for the can container 10 in the present embodiment.
FIG. 10 illustrates another example of a flow of the manufacturing method for the can container 10 in the present embodiment.
FIG. 11 illustrates another example of a flow of the manufacturing method for the can container 10 in the present embodiment.

### Description of Embodiments

Hereinafter, the present invention will be described based on an embodiment of the present invention, but the embodiment described below does not limit the present invention according to the claims. Furthermore, all combinations of features described in the embodiment are not necessarily indispensable for the solution of the present invention.

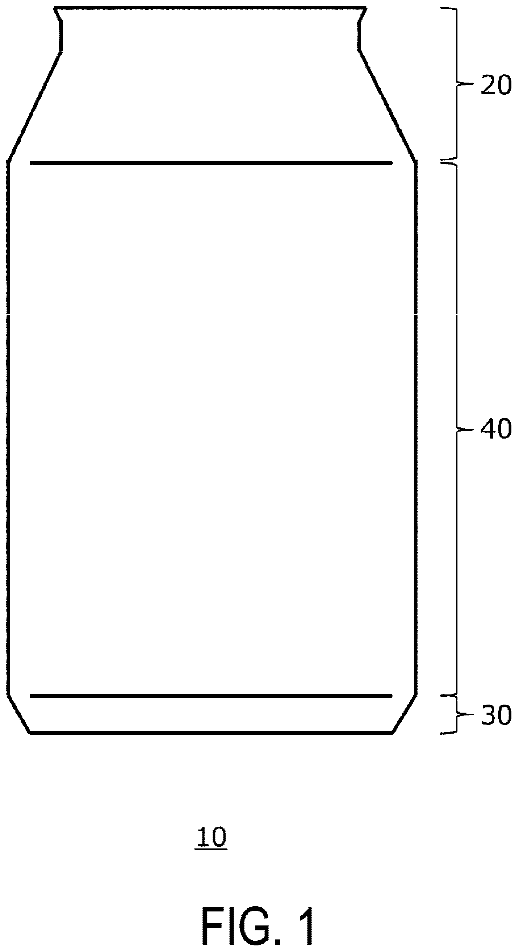

FIG. 1 illustrates an example of a general view of a can container 10 in the present embodiment. In the can container 10 according to the present invention, the amount of a lubricant present at a reduced diameter portion is set to be equal to or less than 2 mg/can, so that defects of a can body and/or print formed at the can body can be prevented, and a hygienic property can be increased.

The can container 10 may be for beverages and foods and filled with a beverage or a food. The can container 10 may be filled with contents other than a food and a beverage, such as a medicine, a chemical product, gas, liquid, and/or solid.

The can container 10 includes a reduced diameter portion 20 provided on one end side, a bottom portion 30 provided on the other end side, and a can barrel portion 40.

The reduced diameter portion 20 is a portion where the diameter of one end of the can container 10 is reduced. The reduced diameter portion 20 may be provided at an opening portion of the can container 10. The reduced diameter portion 20 may be formed such that the outer diameter thereof gradually decreases toward the one end of the can container 10.

The reduced diameter portion 20 may be formed by performing necking on an end portion of the can container 10 before diameter reducing. The reduced diameter portion 20 may include a flange formed at the same time as the necking. The formed flange allows a can lid to be attached. By providing the reduced diameter portion 20 at the can container 10, the use amount of a can lid to be attached to the opening portion of the can container 10 can be reduced. The can container 10 may be a container to which a can lid is attached.

The bottom portion 30 is a bottom formed at the other end of the can container 10. With the bottom portion 30, a filling such as a beverage can be retained. The bottom portion 30 may be formed such that the outer diameter thereof gradually decreases toward the other end of the can container 10. The bottom surface of the bottom portion 30 may be formed in a dome shape that is convex upward.

The can barrel portion 40 is a region between the reduced diameter portion 20 and the bottom portion 30 of the can container 10. The can barrel portion 40 may have a cylindrical shape having a substantially constant outer diameter in a longitudinal direction (an up-down direction in FIG. 1) of the can container 10. The can barrel portion 40 has an outer peripheral surface whose surface area is larger than the reduced diameter portion 20 and the bottom portion 30 and has a substantially constant outer diameter, and thus constitutes a region suitable for performing printing on the surface thereof.

The can barrel portion 40 may have a generally uniform flat surface. Alternatively, the can barrel portion 40 may be subjected to unevenness treatment such as embossing or may be formed with a bent portion or the like.

As described in FIG. 1, the can container 10 may include three regions, that is, the reduced diameter portion 20, the bottom portion 30, and the can barrel portion 40. Alternatively, the can container 10 does not necessarily include the reduced diameter portion 20. For example, when the can container 10 is a straight can or a cup, the can container 10 does not necessarily include the reduced diameter portion 20.

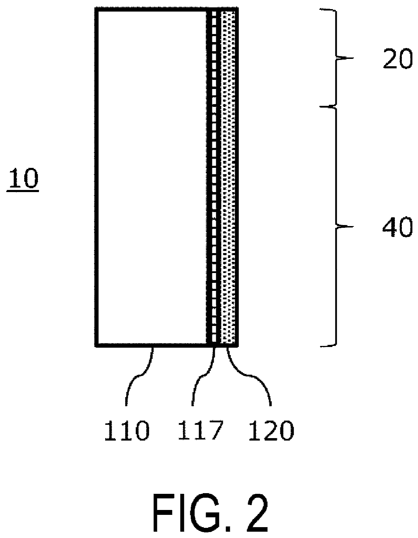

FIG. 2 illustrates an example of a cross-sectional view of the can container 10 in the present embodiment. The can container 10 includes a can body 110 and an ink print layer 120. The can body 110 side (the left side in the drawing) is the inner side of the can container 10, and the ink print layer 120 side (the right side in the drawing) is the outer side of the can container 10.

The can body 110 has a tubular shape and forms a structure of the can container 10. The can body 110 may be a seamless can such as a two-piece can or a welded can such as a three- piece can. The can body 110 may be a cup without formed with a metal lid. The can body 110 may be formed of a single metal that can be used for a beverage can and a food can. For example, the can body 110 may be formed of aluminum, steel, or the like.

The ink print layer 120 is a layer of an ink image that expresses a symbol, a character, a design, and/or a picture. The ink print layer 120 is formed on the outer peripheral surface of the can body 110. The ink print layer 120 is formed on at least one of the reduced diameter portion 20 or the can barrel portion 40. Alternatively, the ink print layer 120 is not necessarily present.

The ink print layer 120 may be a layer which is directly formed at the can body 110 and in which ink is cured. The ink print layer 120 may contain a color material such as a pigment or a dye, a binder resin, and other solid contents of ink composition. The ink composition may be, but is not limited to, an aqueous ink, a solvent ink, an ultraviolet curable ink, or an electron beam curable ink.

Instead of the above configuration, the ink print layer 120 may be a shrink film which covers the can body 110 further from the outside and on which an ink image is printed. For example, the ink print layer 120 may be formed by printing and curing an ink composition on one or both surfaces of the shrink film and attaching the shrink film to the can body 110.

The ink print layer 120 may be a monochrome image of a single color or a color image including a plurality of colors. In the ink print layer 120, monochrome and color may be mixed in each region.

A lubricant layer 117, which is a layer of a lubricant, may be provided between the can body 110 and the ink print layer 120. The lubricant layer 117 may be provided at least at the reduced diameter portion 20. The lubricant layer 117 may be further provided at the bottom portion 30 and/or the can barrel portion 40. With the presence of the lubricant layer 117 at least at the reduced diameter portion 20, the can body 110 can be protected from damage during diameter reducing.

The amount of the lubricant present at the reduced diameter portion 20 is equal to or less than 2 mg/can. In particular, the amount of the lubricant present on the outer surface side of the can body 110 at the reduced diameter portion 20 may be equal to or less than 2 mg/can. The term "mg/can" indicates the amount of the lubricant of the lubricant layer 117 present in one can container 10. By setting the amount of the lubricant to be equal to or less than 2 mg/can, it is possible to prevent the ink or the like from being repelled when the ink print layer 120 is formed. By setting the amount of the lubricant to be equal to or less than 2 mg/can for a place such as the reduced diameter portion 20 that comes in direct contact with a person's mouth, the hygienic property of the can container 10 can be enhanced.

Further, in a case where the ink print layer 120 includes a shrink film, when the amount of the lubricant is too large (for example, when the lubricant at the reduced diameter portion 20 exceeds 2mg/can), an insertion failure is likely to occur when the shrink film is inserted into the can body 110. From this viewpoint, it is desirable that the amount of the lubricant present at the reduced diameter portion 20 is equal to or less than 2 mg/can.

The amount of the lubricant may be equal to or more than 0.01 mg/can. In particular, the amount of the lubricant present on the outer surface side of the can body 110 at the reduced diameter portion 20 may be equal to or more than 0.01 mg/can. By setting the amount of the lubricant to be equal to or more than 0.01 mg, a lubricating property at the time of diameter reducing can be maintained without causing ink repelling or impairing the hygienic property. Further, by containing a certain amount of the lubricant, performance of insertion of the shrink film from the outside is increased when the ink print layer 20 is formed with the shrink film, and thus defects of the can container 10 can be reduced.

The lubricant may be, for example, one or a combination of one or more selected from wax of plant and animal origin, petroleum wax, vaseline, solid paraffin, liquid paraffin, lanolin, polyethylene glycol, edible oil, edible lubricating oil, mineral oil, edible grease, and varnish.

In particular, in a case where the ink print layer 120 includes a shrink film, the lubricant is preferably solid. For example, in this case, the lubricant is preferably wax, petroleum wax, or solid paraffin.

In the present embodiment, the entirety of the can container 10 or a part thereof (e.g., the reduced diameter portion 20) may be immersed in an organic solvent (e.g., a lipophilic solvent such as alkane or ketone) to extract the lubricant into the organic solvent, and then the lubricant dissolved in the organic solvent may be dried, and a measured dry weight may be used as the amount of the lubricant. In this method, there is a possibility that components other than the lubricant may be dissolved from the can container 10, but the main extract is the lubricant, and thus the amount determined in this method may be considered as the amount of the lubricant. Alternatively, in a case where extracted components and the content ratio thereof can be determined by a chemical analysis such as gas chromatography mass spectrometry, the total weight of the lubricant components may be considered as the amount of the lubricant.

As an example, the amount of the lubricant may be measured by the following method. The reduced diameter portion and a flange portion of the reduced diameter portion of the can container held in an inverted state are immersed in 10 mL of acetone-hexane mixture (1:9) poured into a 300 mL glass beaker to extract the lubricant, thereby obtaining extraction liquid. The extraction liquid obtained from five can containers is transferred to an eggplant flask, dried at a reduced pressure, and then redissolved in 1 mL of acetone-hexane mixture (1:9). This sample is transferred to an aluminum dish, stored in a constant temperature dryer at 75°C for 30 minutes, cooled at a room temperature, and then weighed with an electronic balance. The weight of the dried product is divided by 5, whereby the lubricant present at the reduced diameter portion 20 per one can can be measured.

In the present embodiment, the ink print layer 120 is formed at both the reduced diameter portion 20 and the can barrel portion 40. Alternatively, the ink print layer 120 is not necessarily formed at the reduced diameter portion 20.

The ink print layer 120 is not necessarily formed at the bottom portion 30. Alternatively, the ink print layer 120 may be formed at the bottom portion 30.

The can container 10 may include other layers not illustrated in the drawings. For example, an inner surface protection layer may be formed on the inner side (the left side in the drawing) of the can body 110, and/or an outer surface protection layer such as a base coat or varnish may be formed between the can body 110 and the lubricant layer 117. In addition, for example, a protection layer may be further formed at the outer surface of the ink print layer 120.

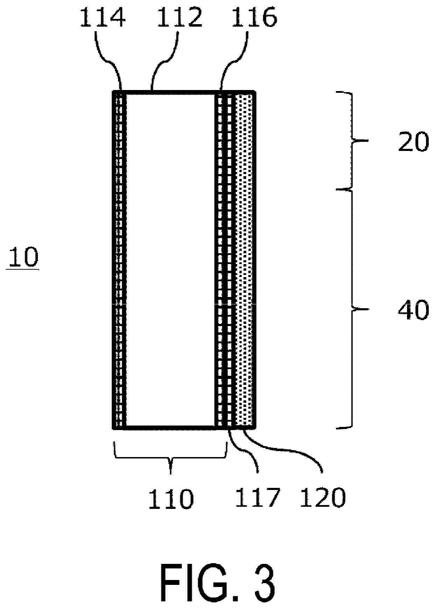

FIG. 3 illustrates a modification example of a cross-section of the can container 10 in the present embodiment. In this example, the can body 110 is not a single metal body, but has a layer configuration including a can main body 112 serving as a core, and a resin film layer 114 and a resin film layer 116 covering the inner surface and/or the outer surface of the can main body 112. In addition, for example, a protection layer may be further formed at the outer surface of the ink print layer 120.

The can main body 112 may be a metal layer that can be used for beverage cans and food cans, such as aluminum or steel. The resin film layer 114 and the resin film layer 116 may be polyethylene terephthalate (PET) films. For example, the can body 110 may be formed by laminating a PET film at the inner and outer surfaces of a metal plate.

By using the can body 110 covered with the resin films in this way, the can body 110 can be prevented from being corroded by a filling. In addition, the use of a lubricant and water can be reduced in forming the can body 110.

In the present embodiment, unless otherwise specified, the same configurations as those described above may be adopted for the lubricant layer 117 and the ink print layer 120. For example, the ink print layer 120 may be a layer which is directly formed on the resin film layer 116 and in which ink is cured. In addition, for example, the ink print layer 120 may be a shrink film which covers the resin film layer 116 further from the outside and on which an ink image is printed. For example, the amount of the lubricant of the lubricant layer 117 present at the outer surface of the resin film layer 116 at the reduced diameter portion 20 may be equal to or less than 2 mg/can. Instead of the above configuration, the ink print layer 120 is not necessarily present.

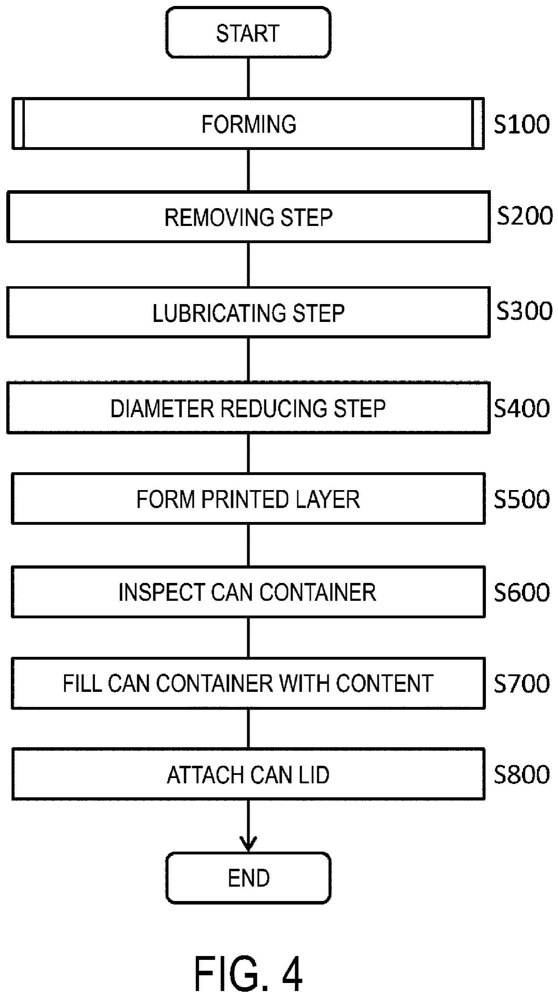

FIG. 4 illustrates an example of a flow of a manufacturing method for the can container 10 in the present embodiment. The can container 10 of the present embodiment can be manufactured by performing processing steps in S100 to S800 in FIG. 4. Note that, for convenience of description, the processing steps in S100 to S800 will be described in order, but the respective processing steps may be interchanged, and/or some processing steps may be omitted without departing from the gist of the present invention.

First, in S100, the bottom portion 30 and the can barrel portion 40 of the can container 10 are formed, thereby performing a forming step of forming the can body 110 having a tubular shape. There are two types of forming methods, that is, wet forming using a coolant, which is a lubricant for cooling, and dry forming without using a coolant.

In the forming step, a can body having a tubular shape may be formed from a sheet material. For example, in the case of wet forming, the sheet material may include a metal sheet. Here, a lubricant layer may be formed at one surface or both surfaces of the metal sheet. In that case, the forming step may be a step of forming the can body 110 from a sheet material including a metal sheet and a lubricant layer formed at one surface or both surfaces of the metal sheet.

For example, in the case of dry forming, the sheet material may include a metal sheet and a resin film layer covering at least one surface of the metal sheet. Here, a lubricant layer may be formed at one surface of the resin film layer. In that case, the forming step may be a step of forming the can body 110 from a sheet material including a metal sheet, a resin film layer, and a lubricant layer formed at one surface of the resin film layer.

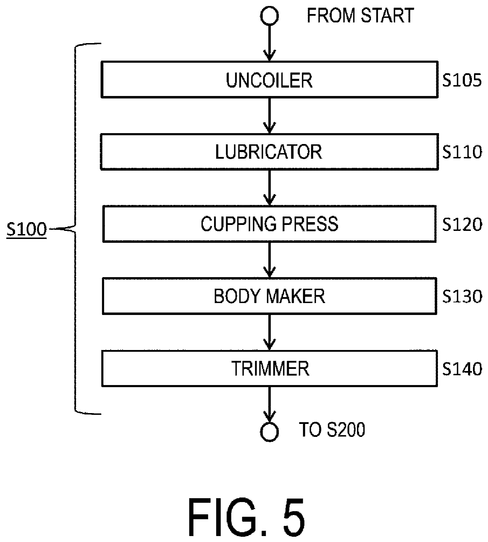

FIG. 5 illustrates an example of a sub-flow (wet forming) in S100 in FIG. 4. The processing in S100 (wet forming) may be executed by executing the processing in S105 to S140 in FIG. 5.

In S105, a process of unwinding and stretching a metal sheet which is a metal plate material wound in a coil shape (uncoiler). The metal sheet may be, but is not limited to, an aluminum plate or a steel plate. The metal sheet becomes the can body 110 after forming.

In S110, a process of applying a lubricant to the stretched metal sheet (lubricator). As the lubricant, a known lubricant may be used. The lubricant includes solid such as wax and liquid such as oil and fat. For example, the lubricant may be one or a combination of one or more selected from wax of plant and animal origin, petroleum wax, Vaseline, solid paraffin, liquid paraffin, lanolin, polyethylene glycol, edible oil, edible lubricating oil, mineral oil, edible grease, and an emulsion thereof.

In particular, the lubricant in S110 preferably contains wax. In addition to the wax, liquid fat or oil which functions as a coolant may be further contained. As a result, a sheet material in which a lubricant layer is formed with the lubricant at one surface or both surfaces of the metal sheet is/are obtained.

Instead of forming the lubricant layer at the metal sheet after the uncoiler, a sheet material obtained by winding a metal sheet formed in advance with a lubricant layer at one or both surfaces thereof into a coil shape may be unwound. The lubricant may be further applied to the metal sheet formed in advance with the lubricant layer.

In S120, a process of punching the sheet material into a cup shape is performed (cupping press).

In S130, the cup-shaped member is subjected to drawing and ironing to thinly stretch the side surface of the cup. Further, a dome-shaped bottom is also formed at the same time, thereby performing a process of forming the can barrel portion 40 and the bottom portion 30 (body maker). In S130, a lubricant (coolant) similar to that described in S110 may be additionally used for cooling.

In S140, a process of removing unnecessary portions of the formed member is performed (trimmer). As a result, the can body 110 is formed.

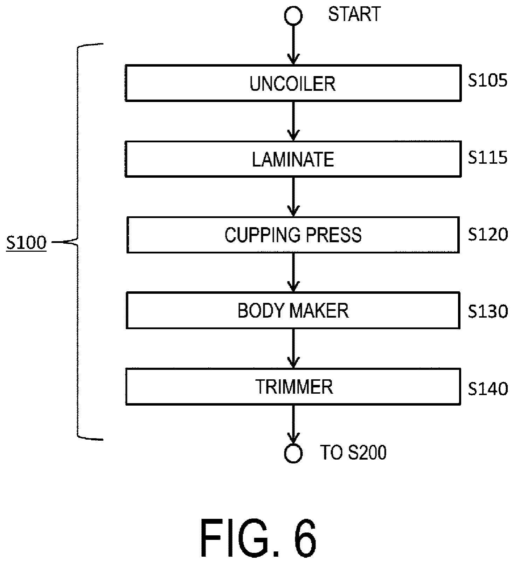

FIG. 6 illustrates an example of a sub-flow (dry forming) in S100 in FIG. 4. The processing in S100 (dry forming) may be executed by executing the processing in S105 to S140 in FIG. 6.

As the processing in S105 (uncoiler), the same processing as in S105 in FIG. 5 may be performed.

In S115, a resin film is laminated at both surfaces or one surface of the metal sheet. As a result, the sheet material including the metal sheet and the resin film layer is obtained. The lamination may be performed in a known method and, for example, the method described in JP 2004-25640 A may be used. After the forming, the metal sheet becomes the can main body 112, and the resin film becomes the resin film layer 114 and the resin film layer 116.

As the resin film, a thermoplastic resin such as polyethylene terephthalate (PET) may be used. Instead of the thermoplastic resin, a thermosetting resin such as a thermosetting acrylic-based resin, a thermosetting epoxy-based resin, a thermosetting polyurethane-based resin, or a thermosetting polyester-based resin may be used. By using the resin film, the same effect as the lubricant used in S110 and S130 in FIG. 5 can be obtained without the lubricant.

The thickness of the resin film may be 0.5 µm or more and 30 µm or less. When the thickness of the resin film is less than 0.5 µm, the surface of the resin film becomes non-slippery, and thus the can body 110 may be scratched when the reduced diameter portion 20 is formed or metal powder may adhere to a tool. When the thickness of the resin film exceeds 30 µm, the adhesiveness of the resin after diameter reducing and after flanging may deteriorate.

Before the resin film is laminated, a primer composition may be applied to a lamination surface of the metal sheet. For example, the metal sheet may be roll-coated with a primer composition containing a polyester resin, a curing agent, and/or a solvent and baked to form a primer layer, and then the resin film may be laminated on the primer layer. The curing agent may be a resol-type phenolic resin derived from m-cresol, for example.

The primer composition may further contain a color material such as a pigment and/or an edible dye. Accordingly, a decorative property can be enhanced even at portions (for example, the bottom portion 30 or the like) of the can container 10 at which the ink print layer 120 is not provided.

After the lamination, the lubricant may be further applied to one surface of the resin sheet to form a lubricant layer. In that case, a sheet material including a metal sheet, a resin film, and a lubricant layer formed at one surface of the resin film is obtained.

Instead of S105 to S115, a coil-shaped member in which a sheet material including a metal sheet, a resin film, and, when needed, a lubricant layer formed at one surface or both surfaces of the resin film is wound in advance may be unwound. For example, after the lamination in S115, a coil-shaped sheet material obtained by winding the sheet material around a coiler may be stored, and then the stored sheet material may be unwound again as needed to perform the subsequent processing. Alternatively, for example, a coil-shaped sheet material may be obtained and unwound to perform the subsequent processing.

As the processing in S120 to S140, the same processing as that described in FIG. 5 may be performed. As a result, the can body 110 is formed.

In S200, a removing step of removing at least a part of the lubricant layer of the can body 110 is performed. In the removing step, a water washing treatment, a heat treatment (i.e., thermal energy), a plasma treatment, or a flame treatment may be used.

In particular, when the sheet material includes a resin film layer, distortion of the resin film resulted from forming can be simultaneously removed by the heat treatment. For example, as the heat treatment, the formed member may be heated at 180 to 220°C for 20 to 90 seconds. As a method of the heat treatment, a hot air heating device, an induction heating (IH) device, and/or an infrared (IR) heating device may be used.

The water washing treatment may be performed using cold water or hot water. The water temperature may be lowered when the remaining amount of the lubricant needs to be increased, and the water temperature may be raised when the remaining amount of the lubricant needs to be decreased.

The plasma treatment may be an atmospheric pressure plasma treatment. The type of gas used in the atmospheric pressure plasma treatment may be at least one of nitrogen, hydrogen, helium, argon, or oxygen. The flow rate of the gas may be from 1 to 200 L per minute. The treatment rate of the atmospheric pressure plasma treatment may be from 1 to 100 m per minute. The plasma irradiation time may be from 0.5 to 10 seconds.

In the atmospheric pressure plasma treatment, the minimum value of the distance between the can body 110 and a plasma electrode may be equal to or less than 50 mm. Preferably, the minimum value of the distance between the can body 110 and the plasma electrode may be equal to or less than 2 mm. The number of electrodes may be one or more. By using a plurality of the electrodes, the treatment capability can be enhanced, and the treatment time can be shortened.

The flame treatment is a treatment in which a reducing flame obtained by mixing and burning a combustible gas such as methane or propane and air or oxygen is applied to an object, and can be performed in a known method. For example, a container surface may be uniformly heated for 0.5 to 2.0 seconds using a burner having a heating power of 35 to 40 µA with a distance between the tip of the burner and the container surface set to about 25 to 75 mm, and then the container may be cooled to a room temperature.

In the removing step, a plurality of treatments may be combined. For example, in the removing step, the water washing and one or more of the heat treatment, the plasma treatment, and the flame treatment may be sequentially performed.

When the sheet material includes neither of a resin film nor a lubricant layer, the removing step in S200 may be omitted.

In S300, a lubricating step of applying a lubricant to the formed can body 110 is performed. The lubricant may be the same as that used in S110. As the lubricant, a solvent having particularly high volatility may be used. For example, hexane may be used. As a result, the lubricant layer 117 is formed.

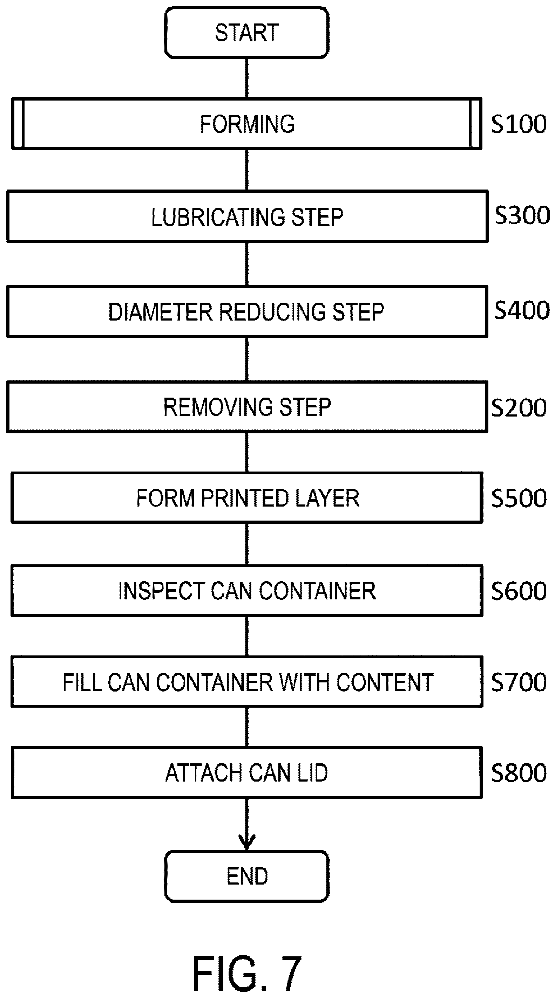

After S300 and before S400, an inner surface protection layer may be formed at the inner peripheral surface of the can body 110. For example, the inner surface protection layer may be formed by applying a coating material to the inner peripheral surface and baking the coating material. This makes it possible to prevent the inner circumferential surface from being scratched. In the examples of the embodiments in FIG. 7 and the subsequent drawings, an inner surface protection layer may be formed before a diameter reducing step in S400.

In S400, a diameter reducing step of forming the reduced diameter portion 20 by reducing the diameter of a part of the can body 110 by performing necking on the can body 110 after the forming. The necking may be performed with a known die necking tool. Simultaneously with or after the necking, flanging may be performed on the can body 110 to form a flange for attachment of a can lid.

A treatment for removing the lubricant layer may be performed after the necking. As an example, at least a part of the lubricant layer may be removed by water washing or heating as in S200. As a method of the heating, a hot air heating device, an induction heating (IH) device, and/or an infrared (IR) heating device may be used. In particular, when a printed layer forming step in S500 is performed after S200, it is preferable to remove the lubricant layer in order to prevent ink from being repelled.

In S500, a printed layer forming step of forming the ink print layer 120 at the outer peripheral surface of the can body 110 is performed. The ink print layer 120 may be formed by performing printing on the outer surface of the can body 110 by any one or more of inkjet printing and/or printing with a printing plate on the can body 110.

The inkjet printing may be a method of directly discharging an ink composition from an inkjet head (IJH) of an inkjet printer to the can body 110, or an offset method of transferring an ink composition discharged from the IJH to a blanket (i.e., a transfer plate) to the can body 110.

The printing with a printing plate may be printing using a printing plate printer. For example, the printing with a printing plate may be a method of transferring an ink composition to the can body 110 using a plate such as a letterpress plate. The ink composition may be directly transferred to the can body 110 by the letterpress plate, or an offset method in which the ink composition transferred to a blanket (i.e., a transfer plate) is further transferred to the can body 110 may be used.

The ink composition may be an aqueous ink, a solvent ink, an ultraviolet curable ink, or an electron beam curable ink. The ink composition may contain a color material selected from a pigment, a dye, and the like, a resin binder, a monomer/oligomer, an initiator, a solvent, and/or an additive such as a dispersant as needed.

After the printing, the ink composition may be subjected to a drying and curing treatment. For example, depending on the type of ink composition, air drying, heating, ultraviolet irradiation, electron beam irradiation, or a combination thereof may be performed.

In particular, by employing the ultraviolet curable ink or the electron beam curable ink, the number of times of the heating treatments can be reduced, the opportunity to apply a heat load to the can body 110 can be reduced, and the slow cooling time can be reduced. As an example, inkjet printing may be performed with the ultraviolet curable ink or the electron beam curable ink.

In addition to or instead of printing the ink to the can body 110, the printed layer forming step may be performed by covering the outer surface of the can body 110 with a shrink film on which an ink image is printed. For example, an ink image may be printed on a shrink film in the same method as described above, and the shrink film may be wound around the can body 110 and shrunk, thereby forming the shrink film on which the image is printed as the ink print layer 120. Instead of the shrink film, a tack label may be used to be attached to the outer surface of the can body 110. The tack label may be made of plastic or paper.

The use of a shrink label or a tack label on which printing is performed in advance is advantageous in that a problem of print repelling by the lubricant on the surface of the can body 110 does not occur. Further, when the lubricant is contained in an amount of 0.01 mg/can or more in the entire can body 110 or the reduced diameter portion 20, the insertion performance of the shrink film can be enhanced.

As the shrink film, a known material can be used. For example, as the shrink film, a film selected from polypropylene, polyethylene, polystyrene, polyvinyl chloride, polyvinylidene chloride, polyolefin, polyethylene terephthalate, and the like can be used.

Formation of the ink print layer 120 may be performed at the entirety or a part of the outer peripheral surface of the can body 110. For example, the formation of the ink print layer 120 may be performed only at the entirety or a part of the can barrel portion 40. For example, the formation of the ink print layer 120 may be performed only at the entirety or a part of the reduced diameter portion 20 and the entirety or a part of the can barrel portion 40.

The formation of the ink print layer 120 may be performed in parallel. For example, the processing in S500 may be performed simultaneously using a plurality of inkjet printers and/or a plurality of printing plate printers. The details will be described below.

The ink print layer 120 may be formed in a plurality of steps. For example, a common design, a common picture, and/or a common character may be formed in advance by printing using a printing plate or by inkjet printing, and then individual designs, individual pictures, and/or individual characters that are different for each product, lot, or the like may be formed on demand by inkjet printing. When the ink print layer 120 is not formed, such as in the case of manufacturing a plain can or a white can on which print is provided later, the processing in S500 may be omitted.

After S500, a protection layer may be further formed at the outer surface of the ink print layer 120 before S600. For example, a layer containing a UV curable resin or the like may be formed as a protection layer at the outer surface of the ink print layer 120 to protect the ink print layer 120.

In S600, the can container 10 formed with the respective layers is inspected. The outer circumferential surface or the inner circumferential surface of the can container 10 may be inspected for a dent, a hole, and/or a scratch. The printed image of the ink print layer 120 may be inspected for a break, misalignment, and/or a blurred spot, or the like.

In S700, the can container 10 is filled with contents. For example, the can container 10 may be filled with a beverage, a food, a drug, a chemical, gas, liquid, and/or solid, or the like.

In S800, a can lid is attached to the can container 10. For example, the can lid may be attached by covering the flange portion of the can container 10 with a lid and seaming the lid by a lid seaming machine.

The flow of the basic processing for manufacturing the can container 10 has been described using FIGS. 4 to 6, but the order of the processing steps may be interchanged or may be performed in parallel as will be described below. Accordingly, the efficiency of the can manufacturing steps can be increased. In addition, when the can container 10 is a cup, the processing in S700 to S800 may be omitted.

S100 to S800 may be performed by a single entity/site or a plurality of different entities/sites. For example, S100 to S600 may be executed in a can manufacturing plant, and S700 and subsequent steps may be executed in a filling plant (also referred to as a packer or bottler).

Alternatively, for example, S100 to S400 may be executed in a can manufacturing plant, and S500 and the subsequent steps may be executed in a filling plant. Accordingly, a printer is installed in the filling factory, and the can containers 10 having any image can be quickly manufactured and shipped in a number necessary for filling.

FIG. 7 illustrates another example of a flow of the manufacturing method for the can container 10 in the present embodiment. In the present embodiment, the removing step in S200 is performed between the diameter reducing step in S400 and the printed layer forming step in S500. That is, S200 is performed after S400.

In the present embodiment, in the removing step in S200, a part of the lubricant applied and/or the lubricant layer formed in S110, S115, and S300 is removed. Accordingly, the lubricant remaining in the can container 10 can be significantly reduced. In the removing step, the lubricant layer 117 may be completely removed or may be partially left. For example, the amount of the lubricant present at the reduced diameter portion 20 (in particular, on the outer surface side of the can body 110 at the reduced diameter portion 20) may be equal to or less than 2 mg/can. Accordingly, print can be prevented from being repelled when the printed layer forming step in S500 is performed.

The removing step may be performed such that the amount of the lubricant present at the reduced diameter portion 20 (in particular, on the outer surface side of the can body 110 at the reduced diameter portion 20) is 0.01 mg/can or more. Accordingly, when the ink print layer 120 is formed with a shrink film, the insertion performance of the shrink film can be increased.

Preferably, water washing and/or heat treatment may be performed in the removing step. By the heat treatment, the removal of the lubricant layer and the removal of the distortion of the resin film can be performed at the same time. For example, as the heat treatment, the formed member is heated at 180 to 220°C for 20 to 90 seconds, whereby the amount of the lubricant can be set to 0.01 mg/can or more and 2 mg/can or less.

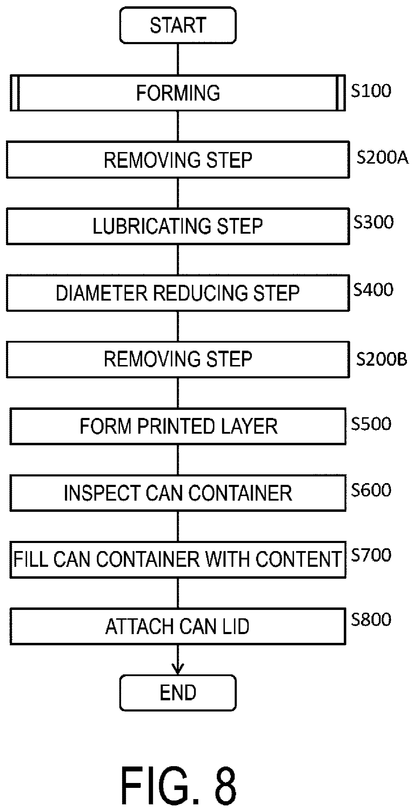

FIG. 8 illustrates another example of a flow of the manufacturing method for the can container 10 in the present embodiment. In the present embodiment, the removing step in S200 is performed between the forming step in S100 and the lubricating step in S300, and between the diameter reducing step in S400 and the printed layer forming step in S500. That is, the lubricating step is performed twice.

In the present embodiment, in a first removing step (S200A), a part of the lubricant applied and/or the lubricant layer formed in S110 and S115 is removed. In a second removing step (S200B), a part of the lubricant applied and/or the lubricant layer formed in S300 is removed. Accordingly, the lubricant remaining in the can container 10 can be more significantly reduced. In the removing step, the lubricant layer 117 may be completely removed or may be partially left. For example, the amount of the lubricant present at the reduced diameter portion 20 (in particular, on the outer surface side of the can body 110 at the reduced diameter portion 20) may be equal to or less than 2 mg/can. Accordingly, print can be prevented from being repelled when the printed layer forming step in S500 is performed. When the amount of the lubricant applied and/or the lubricant layer formed in step 300 is sufficiently small, the second removing step in S200 is not necessarily performed.

Accordingly, the lubricant remaining in the can container 10 can be more significantly reduced. In the removing step, the lubricant layer 117 may be completely removed or may be partially left. For example, the amount of the lubricant present at the reduced diameter portion 20 (in particular, on the outer surface side of the can body 110 at the reduced diameter portion 20) may be equal to or less than 2 mg/can. Accordingly, print can be prevented from being repelled when the printed layer forming step in S500 is performed. When the amount of the lubricant applied and/or the lubricant layer formed in step 300 is sufficiently small, the second removing step in S200 is not necessarily performed.

When the treatment of FIG. 5 (wet forming) is performed in S100, it is preferable to perform water washing in order to sufficiently remove the lubricant in the first removing step (S200A), and it is desirable to perform a flame treatment and/or a plasma treatment by which a surface modification effect on the can body 110 is expected in the second removing step (S200B).

When the treatment of FIG. 6 (dry forming) is performed in S100, it is preferable to perform a heat treatment capable of also removing the distortion of the resin film in the first removing step (S200A), and it is desirable to perform a flame treatment and/or a plasma treatment by which a surface modification effect on the can body 110 is expected in the second removing step (S200B).

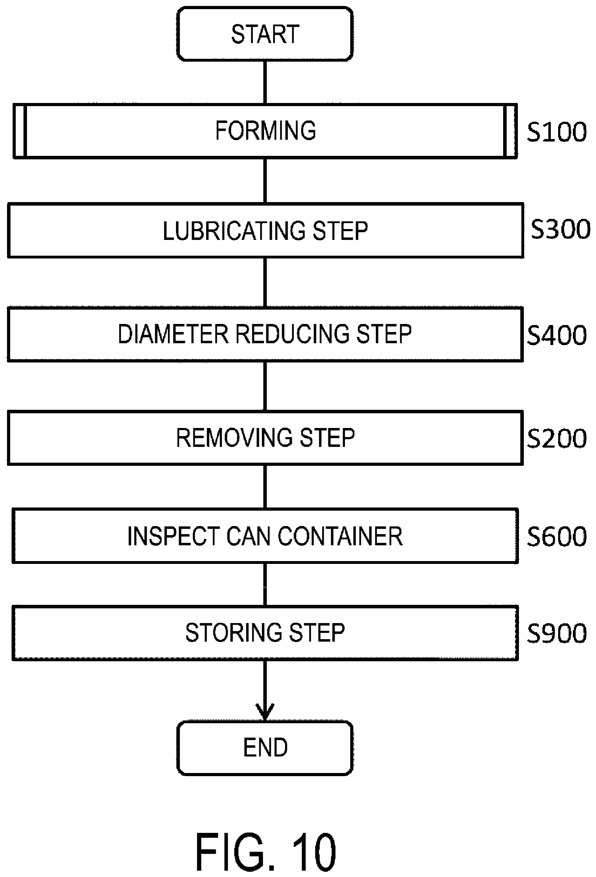

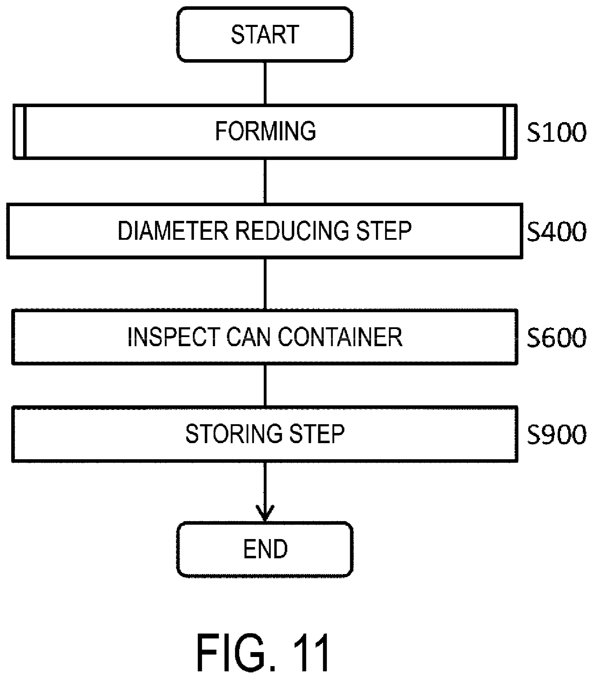

The other points may be the same as those in the embodiment described with reference to FIG. 7. After the removing step in S200B, the printed layer forming step (S500) to a can lid attaching step (S800) may be performed in the same manner as in FIG. 7. Alternatively, an inspection step (S600) and/or a storing step (S900) may be performed in the same manner as in FIGS. 10 and 11 to be described below.

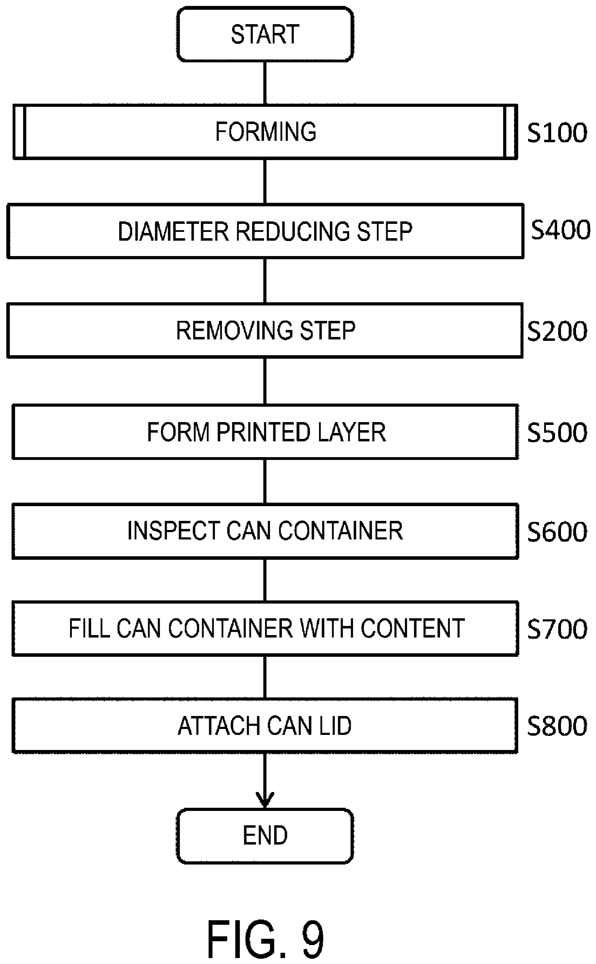

FIG. 9 illustrates another example of a flow of the manufacturing method for the can container 10 in the present embodiment. In the present embodiment, the lubricating step in S300 is not performed, and the removing step in S200 is performed after the diameter reducing step in S400.

Accordingly, the diameter reducing step of forming the reduced diameter portion 20 by reducing the diameter of a part of the can body 110 is performed without applying the lubricant to the formed can body 110 in the lubricating step in S300. In the present embodiment, a lubricant layer is formed in S110 or S115 at a sheet material before forming, or the forming step in S100 is performed using a sheet material in which a lubricant layer is formed in advance at a metal sheet or a resin film.

The removing step in S200 may be executed in the same method as in the embodiment of FIG. 7. In the embodiment of FIG. 9, since the lubricating step in S300 is not present, the removing step may be performed more simply than in FIG. 7. For example, in the present embodiment, an application time of a heat treatment may be 20 to 40 seconds, an irradiation time of a plasma treatment may be 0.5 to 5 seconds, and a heating time of a flame treatment may be 0.5 to 1 second.

According to the present embodiment, since the forming step and the diameter reducing step are performed with the lubricant layer of the sheet material which is applied for the forming step in S100, the lubricating step does not need to be performed. Therefore, resources such as the lubricant and a time for the lubricating step can be reduced. Accordingly, the amount of the lubricant present at the reduced diameter portion 20 (in particular, on the outer surface side of the can body 110 at the reduced diameter portion 20) can be reduced to be equal to or less than 2 mg/can. When the lubricant layer of the sheet material is sufficiently small, the removing step in S200 is not necessarily performed.

FIG. 10 illustrates another example of a flow of the manufacturing method for the can container 10 in the present embodiment. In the present embodiment, the forming step in S100, the lubricating step in S300, the diameter reducing step in S400, and the removing step in S200 may be performed in the same manner as in the embodiment of FIG. 7. Following S200, the inspection step in S600 may be performed without performing the printed layer forming step.

In the present embodiment, the removing step in S200 is performed between the diameter reducing step in S400 and the storing step in S900. The processing in S100 to S600 may be executed in the same methods as those described above.

The storing step in S900 may be performed following the inspection step in S600. In the storing step, the can body 110 is stored in a plain state in which printing is not performed. The storing step may be performed in a light-shielded state so that the can body is not irradiated with an ultraviolet ray. In particular, in the storing step, it is preferable to store the can body in the light-shielded state for one month or more. The ink print layer 120 is protected from ultraviolet rays, and deterioration such as discoloration can be prevented. By storing the can body for one month or more, the lubricant (in particular, a volatile lubricant) present at the surface of the can body 110 can be further reduced.

After the storing step in S900, the can body 110 may be shipped as needed. For example, the can body 110 may be shipped to a filling plant, and one or more of the printed layer forming step in S500, inspection of the can container in S600, the filling step in S700, and the can lid attaching step in S800 may be performed in the filling plant.

In the present embodiment, the amount of the lubricant present at the surface of the can body 110 can be reduced by the removing step. For example, the amount of the lubricant present at the reduced diameter portion 20 may be reduced to be 2 mg/can or less. Accordingly, print can be prevented from being repelled when the printed layer forming step in S500 is performed later in a filling plant.

Further, in the present embodiment, a cleaning effect on the can body 110 is also expected by the removing step. Therefore, the lubricant can be prevented from being deteriorated or from absorbing moisture in the storing step in S900. In particular, when a plasma treatment or a flame treatment is used in the removing step, a high effect is expected.

In addition, the amount of the lubricant present at the reduced diameter portion 20 (in particular, on the outer surface side of the can body 110 at the reduced diameter portion 20) may be equal to or more than 0.01 mg/can. Accordingly, when the ink print layer 120 is formed with a shrink film later in a filling plant, the insertion performance of the shrink film can be increased.

Whereas, the removing step in S200 may be omitted. For example, in a case where there is little concern about repelling of print, such as a case where the ink print layer 120 is formed using a shrink film later in a filling factory, it is desirable to omit the removing step.

FIG. 11 illustrates another example of a flow of the manufacturing method for the can container 10 in the present embodiment. The embodiment of FIG. 11 differs from the embodiment of FIG. 10 in that the lubricating step in S300 and the removing step in S200 are not present. In the present embodiment, the diameter reducing step is performed on a part of the can body 110 without applying a lubricant to the can body 110. In S100 of the present embodiment, as described in the embodiment of FIGS. 4 and 5, a lubricant layer is formed at a surface of a sheet material before the coupling press in S120 is performed.

According to the present embodiment, since the forming step in S100 and the diameter reducing step in S400 are performed with the lubricant layer of the sheet material which is applied for the forming step in S100, the lubricating step does not need to be performed. Therefore, resources such as the lubricant and a time for the lubricating step can be reduced. Accordingly, the amount of the lubricant present at the reduced diameter portion 20 (in particular, on the outer surface side of the can body 110 at the reduced diameter portion 20) can be reduced to be equal to or less than 2 mg/can. The removing step in S200 may be added after the diameter reducing step in S400.

According to the present embodiment, the ink print layer 120 is protected from ultraviolet light by the storing step in S900, and deterioration such as discoloration can be prevented. By storing the can body for one month or more, the lubricant (in particular, a volatile lubricant) present at the surface of the can body 110 can be reduced without the removing step.

Although the present invention has been described above using the embodiments, the technical scope of the present invention is not limited to the scope described in the above embodiments. It is apparent to the person skilled in the art that the above embodiments can be variously changed or modified. It is apparent from the recitation of the claims that the changed or modified embodiments are also included within the technical scope of the present invention.

It should be noted that the order of execution of each processing such as the operations, the procedures, the steps, and the stages of the can body, the can container, and the method described and illustrated in the claims, the specification, and the drawings can be implemented in any order as long as the order is not indicated by "prior to", "before", or the like and as long as the can body or the can container from previous processing is not used in subsequent processing. Even if the operation flows in the claims, the specification, and the drawings are described using words such as "first" and "next" for convenience of description, this does not mean that it is essential to perform the operations in this order.

### Reference Signs List

10 Can container
20 Reduced diameter portion
30 Bottom portion
40 Can barrel portion
110 Can body
112 Can main body
114 Resin film layer
116 Resin film layer
117 Lubricant layer
120 Ink print layer

## Claims

1. A can container comprising:
a reduced diameter portion; and
a can barrel portion, wherein
an amount of a lubricant present at the reduced diameter portion is equal to or less than 2 mg/can.

2. The can container according to claim 1, further comprising:
a layer configuration including
a can body having a tubular shape, and
an ink print layer formed on an outer surface of the can body, wherein
the amount of the lubricant present at the reduced diameter portion on the outer surface side of the can body is equal to or less than 2 mg/can.

3. The can container according to claim 2, wherein
the ink print layer is a layer which is directly formed on the can body and in which ink is cured.

4. The can container according to claim 2, wherein
the ink print layer is a shrink film which covers the can body further from an outside and on which an ink image is printed.

5. The can container according to claim 1 or 2, further comprising:
a layer configuration including
a can main body having a tubular shape, and
a resin film layer covering at least an outer surface of the can main body, wherein
the amount of the lubricant present at an outer surface of the resin film layer at the reduced diameter portion is equal to or less than 2 mg/can.

6. The can container according to claim 5, further comprising:
an ink print layer formed on the outer surface of the resin film layer, wherein
the amount of the lubricant present on the outer surface side of the resin film layer at the reduced diameter portion is equal to or less than 2 mg/can.

7. The can container according to claim 6, wherein
the ink print layer is a layer which is directly formed on the resin film layer and in which ink is cured.

8. The can container according to claim 6, wherein
the ink print layer is a shrink film which covers the resin film layer further from an outside and on which an ink image is printed.

9. The can container according to any one of claims 1 to 8, wherein
the can container is for beverages and foods and is filled with a beverage or a food.

10. A manufacturing method for a can container, comprising:
a forming process of forming a can body having a tubular shape from a sheet material including a metal sheet and a resin film layer covering at least one surface of the metal sheet or from a sheet material including a metal sheet;
a lubricating process of applying a lubricant to the can body formed;
a diameter reducing process of reducing a diameter of a part of the can body to form a reduced diameter portion; and
a printed layer forming process of forming an ink print layer on an outer peripheral surface of the can body.

11. The manufacturing method for a can container according to claim 10, wherein
the forming process is a process of forming the can body from a sheet material including the metal sheet, the resin film layer, and a lubricant layer formed at one surface of the resin film layer.

12. The manufacturing method for a can container according to claim 10, wherein
the forming process is a process of forming the can body from a sheet material including the metal sheet and a lubricant layer formed at one surface or both surfaces of the metal sheet.

13. The manufacturing method for a can container according to claim 11, further comprising:
a removing process of removing at least a part of the lubricant layer between the forming process and the lubricating process.

14. A manufacturing method for a can container, comprising:
a forming process of forming a can body having a tubular shape from a sheet material including a metal sheet, a resin film covering at least one surface of the metal sheet, and a lubricant layer formed at one surface of the resin film, or from a sheet material including a metal sheet and a lubricant layer formed at one surface of both surfaces of the metal sheet;
a diameter reducing process of reducing a diameter of a part of the can body to form a reduced diameter portion without applying a lubricant to the can body formed; and
a printed layer forming process of forming an ink print layer on an outer peripheral surface of the can body.

15. The manufacturing method for a can container according to any one of claims 10 to 14, further comprising:
a removing process of removing at least a part of the lubricant applied in the lubricating process or the lubricant layer between the diameter reducing process and the printed layer forming process.

16. The manufacturing method for a can container, comprising:
a lubricating process of applying a lubricant to a can body including a can main body having a tubular shape and a resin film layer covering at least an outer surface of the can main body, or a can body including a can main body having a tubular shape;
a diameter reducing process of reducing a diameter of a part of the can body to form a reduced diameter portion; and
a storing process of storing the can body in a plain state in which printing is not performed.

17. A manufacturing method for a can container, comprising:
a forming process of forming a can body having a tubular shape from a sheet material including a metal sheet, a resin film covering at least one surface of the metal sheet, and a lubricant layer formed at one surface of the resin film;
a diameter reducing process of reducing a diameter of a part of the can body to form a reduced diameter portion without applying a lubricant to the can body; and
a storing process of storing the can body in a plain state in which printing is not performed.

18. The manufacturing method for a can container according to claim 16, further comprising:
a removing process of removing a part of the lubricant of the can body between the diameter reducing process and the storing process.

19. The manufacturing method for a can container according to claim 16 or 17, wherein
the storing process is performed in a light-shielded state so that the can body is not irradiated with an ultraviolet ray.

20. The manufacturing method for a can container according to claim 19, wherein
the storing process includes storing the can body in the light-shielded state for one month or more.

21. The manufacturing method for a can container according to any one of claims 10 to 15, wherein
the printed layer forming process includes performing printing to an outer surface of the can body by any one or more of inkjet printing and printing with a printing plate.

22. The manufacturing method for a can container according to any one of claims 10 to 15, wherein
the printed layer forming process includes covering an outer surface of the can body with a shrink film on which an ink image is printed.

23. The manufacturing method for a can container according to claim 13, wherein
in the removing process, a thermal energy, a plasma treatment, or a flame treatment is used.

24. The manufacturing method for a can container according to claim 15, wherein
in the removing process, a thermal energy, a plasma treatment, or a flame treatment is used.
